# EUROPEAN PATENT APPLICATION

(11) **EP 3 617 650 A1**
(43) Date of publication of application: **04.03.2020**
(21) Application number: 18191955.6
(22) Date of filing: 31.08.2018
(51) Int. Cl.: G01C 21/32, G06F 16/29

(54) **METHODS, APPARATUSES AND COMPUTER PROGRAM FOR VEHICLES AND A BACKEND ENTITY**

(71) Applicant: VOLKSWAGEN AKTIENGESELLSCHAFT, 38440 Wolfsburg (DE)
(72) Inventor: Schmitz, Steffen, 46485 Wesel (DE); El Assaad, Ahmad, 38448 Wolfsburg (DE); Jornod, Guillaume, 10245 Berlin (DE)

(57) **Abstract**

Embodiments relate to apparatuses, methods and a computer program for vehicles and for a backend entity. The method for the backend entity comprises determining an estimated driving route of a vehicle. The method further comprises determining information related to an area with insufficient coverage of a mobile communication system along the estimated route of the vehicle. The backend entity communicates with the vehicle via the mobile communication system. The method further comprises transmitting aggregated environmental modeling data for the area with insufficient coverage of the mobile communication system from the backend entity to the vehicle based on the information related to the area with insufficient coverage of the mobile communication system.

## Description

The present invention relates to apparatuses, methods and a computer program for vehicles and for a backend entity, more specifically, to operating a vehicle within an area with insufficient coverage of a mobile communication system.

The improvement of vehicle functionality by processing data is a field of research and development. For example, LIDAR (Light Detection and Ranging) may be used by vehicles to detect and track other vehicles on the road. Based on such tracking functionality, a vehicle may be configured to engage emergency breaking, e.g. to avoid a collision with another vehicle or with a pedestrian. In some systems, perception sensor data may further be used to operate a vehicle autonomously or semi-autonomously. This may require precise perception sensor data and environmental modeling data, so the vehicle may be safely operated. Such data might not be available at all times, since an availability of sufficient coverage of a mobile communication system, over which such data may be provided, may vary. More information may be found in patent applications DE 10 2013 222048 A1, EP 297 62 43, EP 319 68 04 A1 and S. Yenkanchi: "Multi Sensor Data Fusion for Autonomous Vehicles". None of the above documents provides a concept for dealing with areas in which a supply of environmental modeling data is restricted.

There may be a desire for an improved concept for operating a vehicle, which enables operating the vehicle while the vehicle is unable to be supplied with environmental modeling data.

Autonomous or semi-autonomous vehicles may require up-to-date environmental modeling data to be operated more efficient and / or more safely, e.g. to augment perception sensor data that is generated by the vehicles themselves. This environmental modeling data may be prepared by a backend entity, e.g. a server or server center, and may be supplied to the vehicles. Since the vehicle may require a steady supply of environmental modeling data, which may be constantly kept up-to-date by a backend entity, the environmental modeling data may be streamed to the vehicle based on the road the vehicle travels, e.g. to make sure the vehicle has the most up-to-date version of the environmental modeling data. Embodiments are based on the finding that a coverage of a mobile communication system might not be sufficient to support data transmissions between a vehicle and a backend entity at all times, and that areas of coverage of a mobile communication system are substantially static, i.e. whether an area has sufficient coverage of a mobile communication system might only change slowly over time. If areas are known, in which the coverage of the mobile communication system is insufficient to supply environmental modeling data for operating a vehicle to the vehicle, such areas may be identified. If a vehicle approaches such an area, the environmental modeling data for said area may be aggregated and transmitted to the vehicle in advance for the area with insufficient coverage of the mobile communication system, so the vehicle may be operated safely without a momentary supply of environmental modeling data.

Embodiments provide a method for a backend entity, wherein the backend entity communicates with a vehicle via a mobile communication system. The method comprises determining an estimated driving route of the vehicle. The method further comprises determining information related to an area with insufficient coverage of the mobile communication system along the estimated route of the vehicle. The method further comprises transmitting aggregated environmental modeling data for the area with insufficient coverage of the mobile communication system from the backend entity to the vehicle based on the information related to the area with insufficient coverage of the mobile communication system. Transmitting the aggregated environmental modeling data for the area with insufficient coverage of the mobile communication system may enable a safe and / or more efficient operation of the vehicle within the area with insufficient coverage of the mobile communication system.

In at least some embodiments, the method further comprises determining a scope of the aggregated environmental modeling data based on the area with insufficient coverage of the mobile communication system. The aggregated environmental modeling data may be based on the determined scope of the aggregated environmental modeling data. In some embodiments, the method may comprise determining a scope of the area with insufficient coverage of the mobile communication system, wherein the aggregated environmental modeling data is based on the determined scope of the area with insufficient coverage of the mobile communication system. For example, the environmental modeling data may be aggregated for a road the vehicle is estimated to take within the area with insufficient coverage of the mobile communication system.

The aggregated environmental modeling data for the area with insufficient coverage of the mobile communication system may comprise environmental modeling data to be used for operating the vehicle along the estimated driving route of the vehicle within the area with insufficient coverage of the mobile communication system. This may provide sufficient environmental modeling data for a safe operation of the vehicle within the area with insufficient coverage of the mobile communication system.

In at least some embodiments, the method further comprises transmitting (momentary) environmental modeling data to the vehicle before the vehicle enters the area with insufficient coverage of the mobile communication system and/or after the vehicle leaves the area with insufficient coverage of the mobile communication system. The (momentary) environmental modeling data may comprise the most up-to-date version of the environmental modeling data, which may enable a safer operation of the vehicle by observing the latest changes to the driving environment.

For example, the (momentary) environmental modeling data may correspond to environmental modeling data to be used for operating the vehicle outside the area with insufficient coverage of the mobile communication system. The environmental modeling data may be streamed to the vehicle and may comprise the most current/the latest environmental modeling data for operating the vehicle outside the area with insufficient coverage of the mobile communication system.

The method may further comprise receiving accumulated perception sensor data of the area with insufficient coverage of the mobile communication system from the vehicle after the vehicle leaves the area with insufficient coverage of the mobile communication system. The accumulated perception sensor data may be used to augment the (aggregated or momentary) environmental modeling data to be sent to other vehicles.
In some embodiments, the method further comprises receiving accumulated further perception sensor data of the area with insufficient coverage of the mobile communication system from the vehicle after the vehicle leaves the area with insufficient coverage of the mobile communication system. The accumulated further perception sensor data may originate from a further vehicle. The accumulated further perception sensor data, which the vehicle may have collected from at least one other vehicle driving within area with insufficient coverage of the mobile communication system, may be used to augment the (aggregated or momentary) environmental modeling data to be sent to other vehicles.

Embodiments further provide a method for a vehicle. The vehicle communicates with a backend entity via a mobile communication system. The method may comprise receiving aggregated environmental modeling data for an area with insufficient coverage of the mobile communication system along an estimated route of the vehicle. Alternatively or additionally, the method may comprise receiving further perception sensor data from a further vehicle. The method further comprises obtaining perception sensor data from one or more perception sensors of the vehicle. The method further comprises operating the vehicle based on the perception sensor data and based on at least one element of the group of the received aggregated environmental modeling data for the area with insufficient coverage of the mobile communication system and the further perception sensor data. Receiving the aggregated environmental modeling data for the area with insufficient coverage of the mobile communication system may enable the same operation of the vehicle within the area with insufficient coverage of the mobile communication system compared to the operation with sufficient coverage of the mobile communication system. The further perception sensor data may be used to enable an improved operation of the vehicle within the area with insufficient coverage of the mobile communication system, e.g. if the aggregated environmental modeling data is not successfully received from the backend entity.

In at least some embodiments, the method further comprises accumulating the perception sensor data while the vehicle traverses the area with insufficient coverage of the mobile communication system. The method may further comprise transmitting the accumulated perception sensor data to the backend entity after the vehicle leaves the area with insufficient coverage of the mobile communication system. The accumulated perception sensor data may be used by the backend entity to augment the (aggregated or momentary) environmental modeling data.

For example, the method may further comprise receiving (momentary) environmental modeling data from the backend entity before the vehicle enters the area with insufficient coverage of the mobile communication system and/or after the vehicle leaves the area with insufficient coverage of the mobile communication system. The vehicle may be operated further based on the received environmental modeling data (e.g. before the vehicle enters the area with insufficient coverage of the mobile communication system and/or after the vehicle leaves the area with insufficient coverage of the mobile communication system). This may enable an operation of the vehicle with the most up-to-date version of the environmental modeling data.

For example, the further perception sensor data may be related to (i.e. associated with or linked to) environmental modeling data, e.g. related to the aggregated environmental modeling data or related to the (momentary) environmental modeling data. This may help the vehicle in interpreting the further perception sensor data.
In some embodiments, the method further comprises accumulating the further perception sensor data. The method may further comprise forwarding accumulated further perception sensor data to the backend entity after the vehicle leaves the area with insufficient coverage of the mobile communication system. The accumulated further perception sensor data may be used by the backend entity to augment the (aggregated or momentary) environmental modeling data.
For example, the further perception sensor data is pre-processed perception sensor data of the further vehicle. This may facilitate the use of the further perception sensor data by the vehicle.

The method may further comprise receiving further environmental modeling data from the further vehicle. The vehicle may be operated based on the further environmental modeling received from the further vehicle. This may enable transmitting momentary or aggregated environmental modeling data in between vehicles, e.g. to improve the operation of the vehicles within the area with insufficient coverage of the mobile communication system. Additionally or alternatively, the method further comprises forwarding environmental modeling data to one or more other vehicles for use in operating the other vehicles. For example, the environmental modeling data received or transmitted between vehicles may comprise at least one of information related to one or more obstacles, information related to road conditions, information related to weather conditions (e.g. whether it rains or snows) and information related to a network coverage).

In various embodiments, the method further comprises transmitting the perception sensor data to one or more other vehicles for use in operating the other vehicles. This may enable an improved operation of the other vehicles within the area with insufficient coverage of the mobile communication system, e.g. if the aggregated environmental modeling data is not successfully received from the backend entity by the other vehicle.

Embodiments further provide a computer program having a program code for performing at least one of the methods according to at least some embodiments, when the computer program is executed on a computer, a processor, or a programmable hardware component.

Embodiments further provide an apparatus for a backend entity. The apparatus comprises at least one interface for communicating with a vehicle via a mobile communication system. The apparatus further comprises a control module configured to determine an estimated driving route of the vehicle. The control module is configured to determine information related to an area with insufficient coverage of the mobile communication system along the estimated route of the vehicle. The control module is configured to transmit aggregated environmental modeling data for the area with insufficient coverage of the mobile communication system to the vehicle using the at least one interface based on the information related to the area with insufficient coverage of the mobile communication system.

Embodiments further provide an apparatus for a vehicle. The apparatus comprises at least one interface for communicating with a backend entity via a mobile communication system. The apparatus further comprises a control module configured to receive aggregated environmental modeling data for an area with insufficient coverage of the mobile communication system along an estimated route of the vehicle via the at least one interface and/or to receive further perception sensor data from a further vehicle. The control module is configured to obtain perception sensor data from one or more perception sensors of the vehicle. The control module is configured to operate the vehicle based on the perception sensor data and based on at least one element of the group of the received aggregated environmental modeling data for the area with insufficient coverage of the mobile communication system and the further perception sensor data.

Embodiments further provide a method for a vehicle. The method comprises receiving (momentary) environmental modeling data from a backend entity via a mobile communication system. The method further comprises obtaining perception sensor data from one or more perception sensors of the vehicle. The method further comprises receiving further perception sensor data from a further vehicle. The method further comprises operating the vehicle. The operating of the vehicle comprises operating the vehicle based on the (momentary) environmental modeling data and based on the perception sensor data while the vehicle traverses an area with sufficient coverage of the mobile communication system, and operating the vehicle based on the further perception sensor data and based on the perception sensor data while the vehicle traverses an area with insufficient coverage of the mobile communication system. The further perception sensor data may be used to enable an improved operation of the vehicle within the area with insufficient coverage of the mobile communication system, e.g. if the aggregated environmental modeling data is not successfully received from the backend entity.

Embodiments further provide an apparatus for a vehicle. The apparatus comprises at least one interface for communicating with a backend entity via a mobile communication system, for communicating with a further vehicle, and for obtaining perception sensor data from one of more perception sensors of the vehicle. The apparatus further comprises a control module configured to receive (momentary) environmental modeling data from the backend entity via the mobile communication system using the at least one interface. The control module is configured to obtain perception sensor data from one or more perception sensors of the vehicle via the at least one interface. The control module is configured to receive further perception sensor data from a further vehicle via the at least one interface. The control module is configured to operate the vehicle. The vehicle is operated based on the (momentary) environmental modeling data and based on the perception sensor data while the vehicle traverses an area with sufficient coverage of the mobile communication system. The vehicle is operated based on the further perception sensor data and based on the perception sensor data while the vehicle traverses an area with insufficient coverage of the mobile communication system.

Some other features or aspects will be described using the following non-limiting embodiments of apparatuses or methods or computer programs or computer program products by way of example only, and with reference to the accompanying figures, in which:
- Fig. 1a: shows a flow chart of an embodiment of a method for a backend entity;
- Fig. 1b: shows a flow chart of another embodiment of a method for a backend entity;
- Fig. 1c: shows a block diagram of an embodiment of an apparatus for a backend entity;
- Fig. 2a: shows a flow chart of an embodiment of a method for a vehicle;
- Fig. 2b: shows a flow chart of another embodiment of a method for a vehicle;
- Fig. 2c: shows a block diagram of an embodiment of an apparatus for a vehicle;
- Fig. 3a: shows a flow chart of an embodiment of a method for a vehicle;
- Fig. 3b: shows a block diagram of an embodiment of an apparatus for a vehicle; and
- Fig. 4: shows a schematic map of a scenario comprising an area with insufficient coverage of a mobile communication system.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

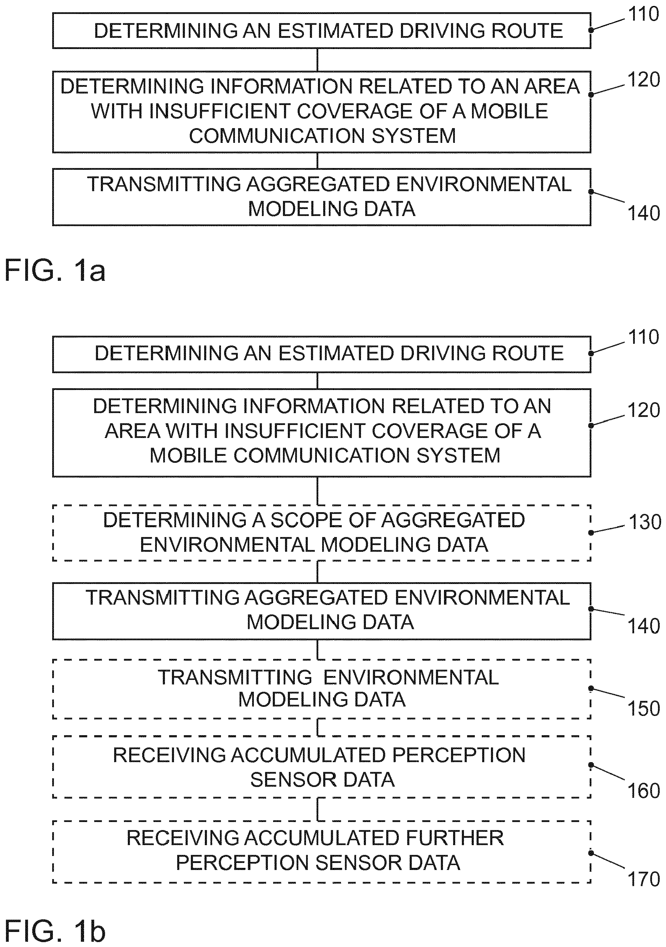

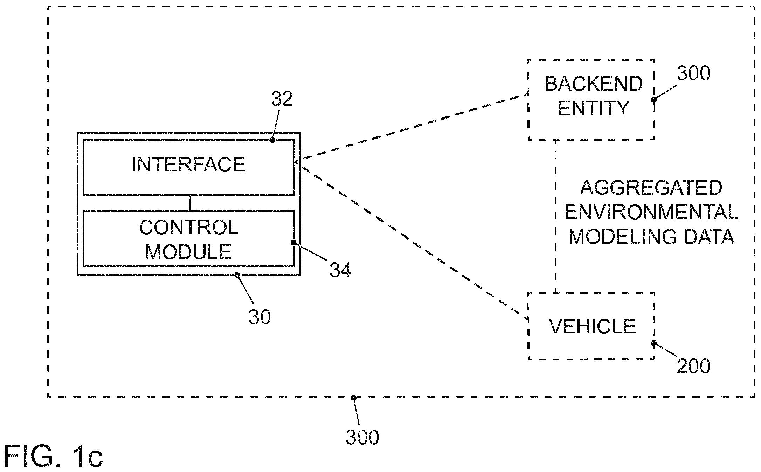

Figs. 1 a and 1 b show flow charts of embodiments of a method for a backend entity 300. The backend entity 300 communicates with a vehicle 200 via a mobile communication system 100. The method comprises determining 110 an estimated driving route of the vehicle 200. The method further comprises determining 120 information related to an area with insufficient coverage of the mobile communication system 100 along the estimated route (i.e. estimated driving route) of the vehicle 200. The method further comprises transmitting 140 aggregated environmental modeling data for the area with insufficient coverage of the mobile communication system 100 from the backend entity 300 to the vehicle 200 based on the information related to the area with insufficient coverage of the mobile communication system 100.

Fig. 1c shows a block diagram of an embodiment of a corresponding apparatus 30 for the backend entity 300. The apparatus 30 comprises at least one interface 32 for communicating with the vehicle 200 via the mobile communication system 100. The apparatus 30 further comprises a control module 34 configured to determine the estimated driving route of the vehicle 200. The control module 34 is configured to determine the information related to an area with insufficient coverage of the mobile communication system 100 along the estimated route of the vehicle 200. The control module 34 is configured to transmit the aggregated environmental modeling data for the area with insufficient coverage of the mobile communication system 100 to the vehicle 200 using the at least one interface 32 based on the information related to the area with insufficient coverage of the mobile communication system 100.

The following description relates to both the method of Figs. 1a and 1b and the apparatus 30 of Fig. 1c.

In at least some embodiments, the method is suitable for providing aggregated environmental modeling data to the vehicle 200 before the vehicle 200 enters the area with insufficient coverage of the mobile communication system, e.g. to enable or improve an operation of the vehicle 200 in the area with insufficient coverage of the mobile communication system 100.

In general, the vehicle 200 may use environmental modeling data for operating the vehicle. For example, the vehicle 200 may be an autonomous vehicle or a semi-autonomously operated vehicle. The environmental modeling data may be required or used for the autonomous or semi-autonomous operation of the vehicle. For example, the environmental modeling data may comprise highly detailed mapping data (i.e. high-resolution maps) and/or models of an environment of the vehicle. For example, the environmental modeling data may comprise a three-dimensional map of objects (e.g. obstacles, road structures, houses etc.) in an environment of the vehicle. During normal operation, e.g. while the vehicle is within an area with sufficient coverage of the mobile communication system, the environmental modeling data may be continuously supplied to the vehicle as momentary environmental modeling data, i.e. environmental modeling data that is relevant for the current position of the vehicle. Momentary" in this context refers to the environmental modeling data that is continuously supplied to the vehicle as long as a connection is available, i.e. before the vehicle enters the area with insufficient coverage and after it leaves the area with insufficient coverage. The momentary environmental modeling data relates to an area outside the area with insufficient coverage. As shown in Fig 1b, the method may further comprise transmitting 150 the (momentary) environmental modeling data to the vehicle 200 before the vehicle 200 enters the area with insufficient coverage of the mobile communication system 100 and/or after the vehicle 200 leaves the area with insufficient coverage of the mobile communication system 100. The (momentary) environmental modeling data may comprise the latest updates to the environmental modeling data. If the vehicle 200 is within an area with insufficient coverage of the mobile communication system, this might not be possible, as the momentary environmental modeling data might not reach the vehicle in time to be useful. Therefore, the method may comprise determining, that the vehicle is about to enter an area with insufficient coverage of the mobile communication system (e.g. by determining 110 the estimated driving route of the vehicle 200 and by determining 120 the information related to the area with insufficient coverage of the mobile communication system 100 along the estimated route of the vehicle 200). If the vehicle 200 is about to enter an area with insufficient coverage of the mobile communication system, the method may comprise aggregating the environmental modeling data based on the area with insufficient coverage of the mobile communication system to generate the aggregated environmental modeling data. The aggregated environmental modeling data may comprise environmental modeling data for the area with insufficient coverage of the mobile communication system. The aggregated environmental modeling data for the area with insufficient coverage of the mobile communication system 100 may comprise environmental modeling data to be used for operating the vehicle 200 along the estimated driving route of the vehicle 200 within the area with insufficient coverage of the mobile communication system 100. In at least some embodiments, as shown in Fig. 1b, the method further comprises determining 130 a scope of the aggregated environmental modeling data based on the area with insufficient coverage of the mobile communication system 100. The aggregated environmental modeling data may be based on the determined 130 scope of the aggregated environmental modeling data. For example, the scope of the aggregated environmental modeling data may comprise the area with insufficient coverage of the mobile communication system and/or one or more roads within the area with insufficient coverage of the mobile communication system the vehicle is likely to drive on, e.g. based on the driving route of the vehicle 200.

The method further comprises transmitting 140 the aggregated environmental modeling data from the backend entity 300 to the vehicle 200. In at least some embodiments, the method may be at least partially performed by the backend entity. For example, the method may be performed by the backend entity 300. For example, at least the transmitting 140 of the aggregated environmental modeling data may be performed by the backend entity. The transmitting 140 of the aggregated environmental modeling data may comprise transmitting the aggregated environmental modeling data directly from the backend entity 300 to the vehicle 200 via the mobile communication system 100, e.g. using a packet-based transmission protocol (e.g. Transmission Control Protocol/Internet Protocol (TCP/IP) or User Datagram Protocol (UDP)) via a wireless connection provided by the mobile communication system 100. Additionally, the determining 110 of the estimated driving route of the vehicle 200 and/or the determining 120 of the information related to the area with insufficient coverage of the mobile communication system may be performed by the backend entity.

Alternatively or additionally, the method may be at least partially performed by the mobile communication system 100, e.g. an entity of the mobile communication system 100. For example, the determining 110 of the estimated driving route of the vehicle 200 and/or the determining 120 of the information related to the area with insufficient coverage of the mobile communication system may be performed by the mobile communication system 100. For example, the transmitting 140 of the aggregated environmental modeling data may be performed by the mobile communication system 100 by forwarding the aggregated environmental modeling data from the backend entity 300 to the vehicle 200. Further method steps as introduced in the following may be performed by the backend entity 300 or the mobile communication system 100. In at least some embodiments, the mobile communication system comprises a (wire-bound) core network and a radio access network. The core network of the mobile communication system 100 may comprise control entities of the mobile communication system associated with the base stations of the mobile communication system. The radio access network may comprise the base stations of the mobile communication system 100. The core network may be configured to be suitable for distributing the data transmissions and/or voice connections routed via the mobile communication system to and from the base stations of the mobile communication system 100. The method may be performed by a control entity of the mobile communication system, e.g. a control entity located within a core network of the mobile communication system 100.

In some embodiments, the backend entity 300 is located at a base station of the mobile communication system 100. For example, the backend entity 300 may be connected to the base station of the mobile communication system 100 using a (direct) cable connection, e.g. a direct fiber optic connection.

The backend entity 300 may be associated with the base station. The backend entity 300 may be associated with a single base station and located at the single base station. Alternatively, the backend entity may be located in the vicinity of a plurality of base stations (of the mobile communication system), and may be associated with the plurality of base stations. For example, the backend entity 300 may be located at a base station of the plurality of base stations, and may be connected to the other base stations of the plurality of base stations via a fiber optic connection between the plurality of base stations. The backend entity 300 may form a mobile edge cloud with the base station of with the plurality of base stations.

Alternatively, the backend entity is located in a core network of the mobile communication system 100. The backend entity 300 may be associated with the plurality of base stations from within the core network of the mobile communication system. The backend entity may be connected to the plurality of base stations via fiber optic connections from the plurality of base stations to the core network of the mobile communication system 100. Alternatively, the backend entity 300 may be a stationary entity located outside the mobile communication system 100. For example, the backend entity 300 may be located within a network of a vehicle manufacturer or of a vehicle service provider of the vehicle 200.

In at least some embodiments, the backend entity 300 may comprise the apparatus 30. In this case, the apparatus 30 of the backend entity 300 may transmit the aggregated environmental modeling data directly to the vehicle 200. Alternatively, the apparatus 30 may be comprised in the mobile communication system 100, e.g. may be an entity of the mobile communication system 100. The control module 34 may be configured to transmit the aggregated environmental modeling data to the vehicle 200 by controlling a transmission of the aggregated environmental modeling data from the backend entity 300 to the vehicle 200 or by forwarding the aggregated environmental modeling data from the backend entity 300 to the vehicle 200.

The backend entity 300 may correspond to a server, a group of servers, a data center, a virtual server instance, a group of virtual server instances, to a backend system of a vehicle manufacturer or to a backend system of a provider of the mobile communication system 100. For example, the vehicle 200 may be at least one of an autonomous vehicle, a semi-autonomous vehicle, a land vehicle, a road vehicle, a car, an automobile, an off-road vehicle, a motor vehicle, motorbike, a truck or a lorry.

In at least some embodiments, the determining 110 of the estimated driving route of the vehicle 200 may comprise extrapolating the estimated driving route of the vehicle 200 from a current trajectory of the vehicle. For example, if the vehicle is driving on a long road or on a highway, it may be assumed that the vehicle will continue to drive on the long road or highway. Additionally, previous trips of the vehicle 200 may be taken into account. For example, if the vehicle has repeatedly traversed a sequence of roads in the past, the estimated driving route may be determined 110 based on the previous trips of the vehicle, e.g. based on the repeatedly traverse sequence of roads.

In various embodiments, the estimated driving route of the vehicle 200 may be determined 110 by the mobile communication system 100, e.g. by the stationary entity of the mobile communication system 100. The estimated driving route of the vehicle 200 may be determined by the mobile communication system 100, e.g. based on a triangulation of the position of the vehicle 200 based on wireless signals of the mobile communication system 100. Alternatively, the estimated driving route of the vehicle 200 may be determined 110 by the backend entity 300, e.g. based on location information of the vehicle provided by the mobile communication system 100.

Alternatively, the estimated driving route of the vehicle 200 may be determined 110 based on information related to a planned route of the vehicle 200 or information related to a destination of the vehicle 200 received from the vehicle 200. For example, if the vehicle 200 uses satellite navigation to reach a destination, the vehicle may provide information related to the planned route or information related to the destination to the backend entity or to the mobile communication system.

In at least some embodiments, the determining 120 of the information related to the area with insufficient coverage of the mobile communication system 100 may be based on a database or data structure of areas having an insufficient coverage of the mobile communication system. For example, the determining 120 of the information related to the area with insufficient coverage of the mobile communication system 100 may comprise determining, whether the vehicle is going to traverse an area with insufficient coverage along the estimated route of the vehicle. For example, the determining 120 of the information related to the area with insufficient coverage of the mobile communication system 100 may comprise querying the database or data structure based on the estimated route of the vehicle, e.g. based on one or more estimated positions of the vehicle 200 along the estimated route of the vehicle. In some examples, the database or data structure of areas having an insufficient coverage of the mobile communication systems may comprise information related to areas with insufficient coverage for a plurality of roads. The plurality of roads may comprise the estimated route of the vehicle 200.

In various embodiments, an area with insufficient coverage (or an area having insufficient coverage) may be an area, in which a data transmission capacity (e.g. transmission speed) of the mobile communication system 100 is below a data transmission capacity threshold, e.g. an area in which a transmission of (momentary) environmental modeling data and/or of perception sensor data is not possible due to constraints or probable constraints in the data transmission capacity. Additionally or alternatively, an area with insufficient coverage may be an area, in which a data transmission latency of the mobile communication system 100 is above a data transmission latency threshold, e.g. in which a transmission of the (momentary) environmental modeling data and/or of perception sensor data is not reliably possible due to an average or maximal latency of the mobile communication system within the area. An area with insufficient coverage may be an area, in which an a transmission protocol of the mobile communication system 100 is not comprised within a group of supported transmission protocols, e.g. in which a transmission of the (momentary) environmental modeling data and/or of perception sensor data is not reliably possible due to the available transmission protocol not supporting fast enough transmissions. For example, the group of supported transmission protocols may comprise 5G- and LTE (Long Term Evolution)-based transmission protocols. For example, the area with insufficient coverage may be a no-coverage area, or an insufficient or no-coverage area. In at least some embodiments, "coverage" of the mobile communication system in an area refers to an ability of the mobile communication system within the area to provide data communication between the vehicle and the backend (e.g. data communication having a pre-determined quality of service).

In at least some embodiments, the information related to the area with insufficient coverage of the mobile communication system 100 along the estimated route of the vehicle 200 may indicate that, or whether, an area with insufficient coverage is coming up or is located along the estimated route of the vehicle. For example, the information related to the area with insufficient coverage of the mobile communication system 100 along the estimated route of the vehicle 200 may comprise information related to a lateral distance and/or information related to an estimated time distance between the vehicle 200 and the area with insufficient coverage. Additionally or alternatively, the information related to the area with insufficient coverage of the mobile communication system 100 along the estimated route of the vehicle 200 may comprise information related to an extent or scope of the area with insufficient coverage of the mobile communication system.

In various embodiments, the method further comprises updating the environmental modeling data (e.g. for the momentary environmental modeling data and/or for the aggregated environmental modeling data) based on perception sensor data of the vehicle. For example, the method may further comprise receiving perception sensor data of the vehicle 200 (e.g. from the vehicle 200). For example, the perception sensor data may comprise at least one of a RADAR (Radio Detection and Ranging, in the following denoted "radar") sensor data, LIDAR (Light Detection and Ranging, in the following denoted "lidar") sensor data, ultrasound sensor data, ABS (Anti-lock Braking System) sensor data and ESC (Electronic Stability Control) sensor data (in German ESP - Elektronisches Stabilitatsprogramm). The method may comprise updating and/or adjusting the environmental modeling data based on the received perception sensor data. In at least some embodiments, the perception sensor data may be pre-processed perception sensor data of the vehicle 200. For example, the vehicle 200 may process or pro-process the perception sensor data before a transmission of the perception sensor data. For example, the perception sensor data may be defined relative to the environmental modeling data. The perception sensor data may be aligned with the environmental modeling data. For example, the perception sensor data may comprise at least one of a location of the vehicle 200, a sensor direction of a perception sensor of the vehicle 200, a driving direction of the vehicle 200 and a driving velocity of the vehicle 200 while the perception sensor data is recorded. The location of the vehicle 200, the sensor direction of the perception sensor and/or the driving direction of the vehicle 200 may be defined relative to the environmental modeling data (e.g. using the same coordinate space or coordinate system). The perception sensor data may be related to the environmental modeling data, e.g. related to the aggregated environmental modeling data or related to momentary environmental modeling data.

While the vehicle 200 is within the area with insufficient coverage of the mobile communication system, the vehicle 200 might not be capable of transmitting the perception sensor data, e.g. due to insufficient available bandwidth. For example, the perception sensor data may be accumulated by the vehicle 200 while the vehicle is within the area with insufficient coverage of the mobile communication system. After the vehicle 200 leaves the area with insufficient coverage of the mobile communication system, the accumulated environmental modeling data may be transmitted by the vehicle 200 and received 160 by the backend entity 300. In at least some embodiments, as shown in Fig. 1b, the method further comprises receiving 160 accumulated perception sensor data (i.e. intermittent data) of the area with insufficient coverage of the mobile communication system 100 from the vehicle 200 after the vehicle 200 leaves the area with insufficient coverage of the mobile communication system 100. The accumulated perception sensor data may be the perception sensor data, that is recorded and accumulated by the vehicle 200 while the vehicle 200 is within the area with insufficient coverage of the mobile communication system 100.

The vehicle 200 might not only transmit its own perception sensor data. In at least some embodiments, the vehicle 200 might further receive further perception sensor data from a further vehicle, e.g. from one or more further vehicles, to improve an operation of the vehicle 200 within the area with insufficient coverage of the mobile communication system. The further perception sensor data may be implemented similar to the perception sensor data. The further perception sensor data may be similar to the perception sensor data, but may originate from a further vehicle, e.g. from one or more further vehicles. The vehicle 200 may accumulate the further perception sensor data of the further vehicle while the vehicle is located within the area with insufficient coverage of the mobile communication system and transmit the accumulated further perception sensor data to the backend entity 300. In at least some embodiments, as shown in Fig. 1b, the method further comprises receiving 170 accumulated further perception sensor data of the area with insufficient coverage of the mobile communication system 100 from the vehicle 200 after the vehicle 200 leaves the area with insufficient coverage of the mobile communication system 100. The accumulated further perception sensor data may originate from a further vehicle, e.g. from one or more further vehicles.

In various embodiments, the backend entity 300 communicates with the vehicle 200 via the mobile communication system 100. For example, the backend entity 300 may be configured to communicate with base stations of the mobile communication system 100 (e.g. via a wire-bound connection), and the base stations of the mobile communication system 100 may be configured to wirelessly communicate with the vehicle 200. The backend entity 300 may be configured to receive the perception sensor data, the accumulated perception sensor data and/or the accumulated further sensor data from the vehicle 200 via the mobile communication system 100 and/or to transmit the aggregated environmental modeling data and/or the (momentary) environmental modeling data to the vehicle 200 via the mobile communication system 100.

In general, the mobile communication system 100 may, for example, correspond to one of the Third Generation Partnership Project (3GPP)-standardized mobile communication networks, where the term mobile communication system is used synonymously to mobile communication network. The mobile communication system may be a cellular mobile communication system. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station or base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a vehicle, a mobile relay transceiver for D2D communication, etc. A mobile transceiver may also be referred to as User Equipment (UE) or mobile in line with the 3GPP terminology.

A base station transceiver can be located in the fixed or stationary part of the mobile communication system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver, e.g. the vehicle 200, can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following, a cell may represent an according base station transceiver generating the cell or, likewise, a base station transceiver may represent a cell the base station transceiver generates.

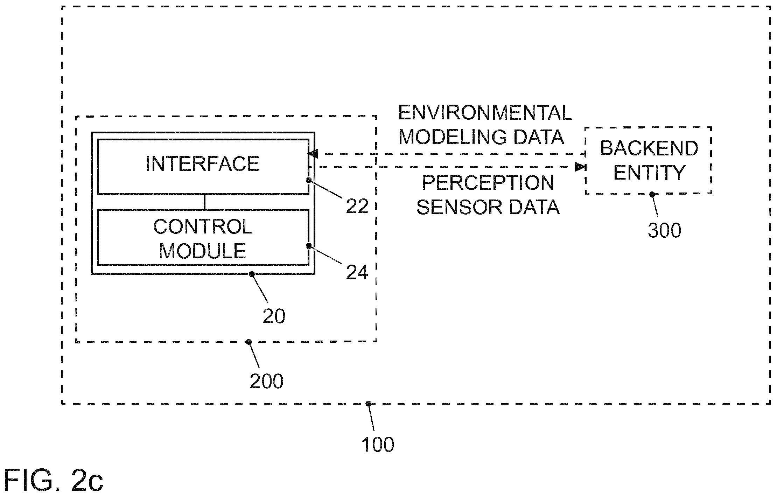

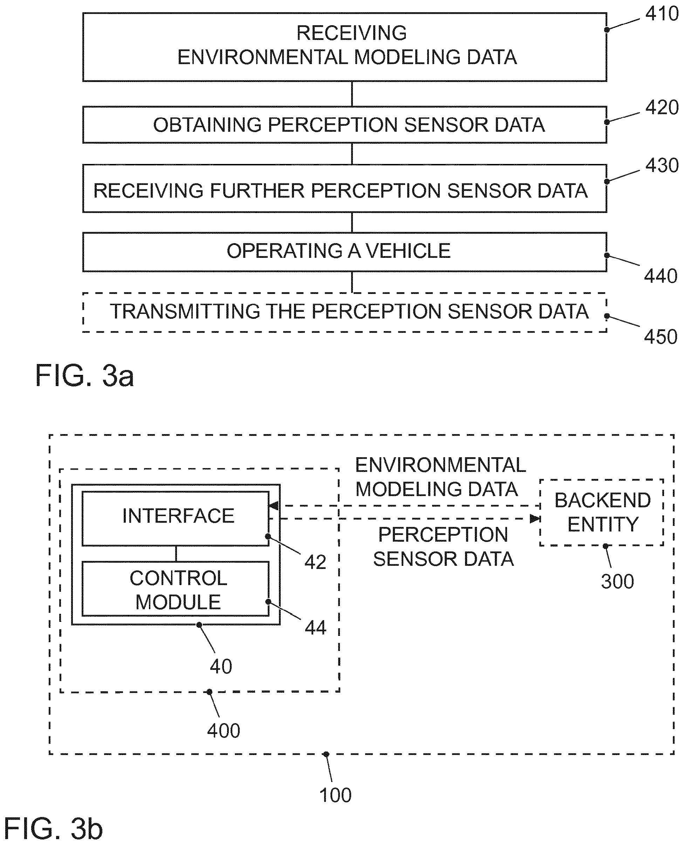

The at least one interface 32 (and/or the at least one interface 22 of Fig. 2c and/or the at least one interface 42 of Fig. 3b) may correspond to one or more inputs and/or outputs for receiving and/or transmitting information, which may be in digital (bit) values according to a specified code, within a module, between modules or between modules of different entities. The at least one interface 32; 22; 42 may be configured to communicate via the mobile communication system 100, e.g. with the vehicle 200; 400 and/or the backend entity 300. In some embodiments, the at least one interface 32; 22; 42may be suitable to be connected to the mobile communication system 100 using a wire-bound connection.

In embodiments the control module 34 (and/or the control module 24 of Fig. 2c and/or the control module 44 of Fig. 3b) may be implemented using one or more processing units, one or more processing devices, any means for processing, such as a processor, a computer or a programmable hardware component being operable with accordingly adapted software. In other words, the described function of the control module 34; 24; 44 may as well be implemented in software, which is then executed on one or more programmable hardware components. Such hardware components may comprise a general-purpose processor, a Digital Signal Processor (DSP), a micro-controller, etc. The control module 34 is coupled to the at least one interface 32. The control module 24 is coupled to the at least one interface 22. The control module 44 is coupled to the at least one interface 42.

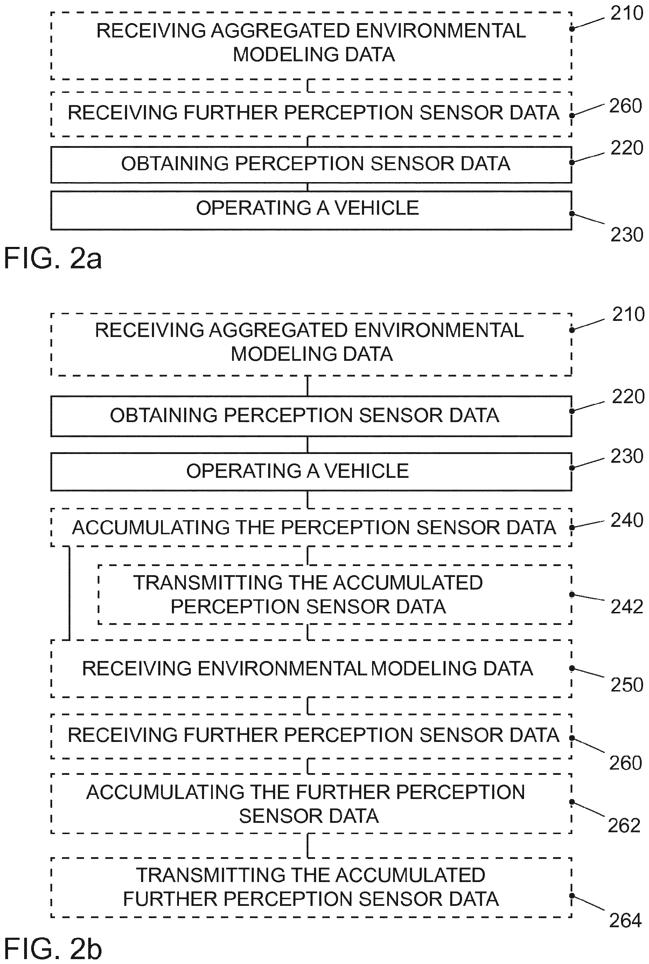

More details and aspects of the apparatus 30 and the method are mentioned in connection with the proposed concept or one or more examples described above or below (e.g. Figs. 2a - 4). The apparatus 30 and/or the method may comprise one or more additional optional features corresponding to one or more aspects of the proposed concept or one or more examples described above or below.

Figs. 2a and 2b show flow charts of embodiments of a method for a vehicle 200. The vehicle 200 communicates with a backend entity 300 via a mobile communication system 100. The method further comprises obtaining 220 perception sensor data from one or more perception sensors of the vehicle 200. The method comprises receiving 210 aggregated environmental modeling data for an area with insufficient coverage of the mobile communication system 100 along an estimated route of the vehicle 200 and/or receiving 260 further perception sensor data from a further vehicle. The method further comprises operating 230 the vehicle 200 based on the perception sensor data and based on at least one element of the group of the received aggregated environmental modeling data for the area with insufficient coverage of the mobile communication system 100 and the further perception sensor data. The method may be performed by the vehicle 200.

Fig. 2c shows a block diagram of an embodiment of a corresponding apparatus for the vehicle 200. The apparatus 20 comprises at least one interface 22 for communicating with the backend entity 300 via the mobile communication system 100. The apparatus 20 further comprises a control module 24. The control module 24 is configured to obtain the perception sensor data from the one or more perception sensors of the vehicle 200. The control module 24 is configured to receive the aggregated environmental modeling data for the area with insufficient coverage of the mobile communication system 100 along an estimated route of the vehicle 200 via the at least one interface 22 and/or to receive the further perception sensor data via the at least one interface. The control module 24 is configured to obtain the perception sensor data from the one or more perception sensors of the vehicle 200. The control module 24 is further configured to operate the vehicle 200 based on the perception sensor data and based on at least one element of the group of the received aggregated environmental modeling data for the area with insufficient coverage of the mobile communication system 100 and the further perception sensor data. Fig. 2c further shows the vehicle 200 comprising the apparatus 20. Embodiment further provide a system comprising the apparatus 30 (and/or the backend entity 300) of Fig. 1c and the apparatus 20 (and/or the vehicle 200 comprising the apparatus 20). The following description relates to both the method of Figs. 2a and 2b and the apparatus 20 of Fig. 2c.

The vehicle 200 communicates with the backend entity 300 via the mobile communication system 100. For example, the vehicle 200 may receive the aggregated environmental modeling data (and/or (momentary) environmental modeling data as introduced in the following) via the mobile communication system 100, e.g. using a packet-based transmission protocol via a wireless connection provided by the mobile communication system 100. The vehicle 200 may provide the perception sensor data (e.g. the accumulated perception sensor data) to the backend entity 300 via the mobile communication system 100, e.g. using a packet-based transmission protocol via a wireless connection provided by the mobile communication system 100.

The method further comprises obtaining 220 perception sensor data from one or more perception sensors of the vehicle 200. For example, the perception sensor data may be obtained indirectly from the one or more perception sensors of the vehicle, e.g. via a sensor system or via a driving system of the vehicle 200. In at least some embodiments, the method comprises obtaining 220 the perception sensor data of one or more perception sensors of the vehicle 200 from a sensor system or via a driving system of the vehicle 200. For example, the vehicle 200 (e.g. the apparatus 20) may comprise the one or more perception sensors. The one or more perception sensors of the vehicle may comprise at least one element of the group of a radar sensor, a lidar sensor, an ultrasound sensor, an ABS sensor and an ESC sensor. The perception sensor data may be obtained 220 from the one or more perception sensors by reading out the perception sensor data from the one or more perception sensor data and/or by receiving the perception sensor data from the one or more perception sensors, e.g. via the at least one interface. In at least some embodiments, the at least one interface 22 (and/or at least one interface 32 as introduced in connection with Fig. 3b) may be configured to communicate with the one or more perception sensors, e.g. via a local bus or interconnect of the vehicle 200. In at least some embodiments, the method further comprises processing or pre-processing the perception sensor data. Pre-processing the perception sensor data may comprise converting the raw perception sensor data into a different format (e.g. a compressed format) for storage. Pre-processing the perception sensor data may comprise cleaning raw perception sensor data to remove sensor noise. Pre-processing the perception sensor data may comprise extracting a portion of the raw perception sensor data to generate the perception sensor data. Processing the perception sensor data may comprise performing object recognition on the perception sensor data. Processing the perception sensor data may comprise aligning the perception sensor data with environmental modeling data, e.g. with the aggregated environmental modeling data or with momentary environmental modeling data.

The method comprises operating 230 (i.e. driving) the vehicle 200 based on the received aggregated environmental modeling data for the area with insufficient coverage of the mobile communication system 100 and based on the perception sensor data. For example, the vehicle 200 may be operated by using the environmental modeling data (e.g. the aggregated environmental modeling data and/or momentary environmental modeling data) as a reference for comparison with the perception sensor data. Once the perception sensor data is aligned with the environmental modeling data, the vehicle 200 may be operated based on the road information, lane information and/or obstacle information comprised in the environmental modeling data. A steering angle and/or a velocity of the vehicle 200 may be controlled based on the received aggregated environmental modeling data for the area with insufficient coverage of the mobile communication system 100 and based on the perception sensor data. For example, the vehicle may choose its path along the road based on the environmental modeling data, and the perception sensor data may be used to locate the vehicle 200 relative to the environmental modeling data and to detect additional obstacles (e.g. further vehicles) not present in the environmental modeling data. In at least some embodiments, as shown in Fig. 2b, the method further comprises receiving 250 (momentary) environmental modeling data from the backend entity 300 before the vehicle 200 enters the area with insufficient coverage of the mobile communication system 100 and/or after the vehicle 200 leaves the area with insufficient coverage of the mobile communication system 100. The vehicle 200 may be operated 230 further based on the received (momentary) environmental modeling data, e.g. while the vehicle is located within an area with sufficient coverage of the mobile communication system. If or while the vehicle 200 is located within an area with insufficient coverage of the mobile communication system, the aggregated environmental modeling data may be used for operating the vehicle 200. For example, the (momentary) environmental modeling data may comprise newer, more recently updated and/or more precise environmental modeling data than the aggregated environmental modeling data.

In various embodiments, the method may comprise transmitting the perception sensor data to the backend entity 300. At the backend entity 300, the perception sensor data may be used to update the environmental modeling data. For example, while the vehicle 200 is located within an area with sufficient coverage of the mobile communication system, the perception sensor data may be transmitted continuously to the backend entity 300. This might not be possible while the vehicle 200 is located within an area with insufficient coverage of the mobile communication system 100. In at least some embodiments, as further shown in Fig. 2b, the method further comprises accumulating (i.e. storing or collecting) 240 the perception sensor data while the vehicle 200 traverses the area with insufficient coverage of the mobile communication system 100. The accumulated perception sensor data may be the perception sensor data that the vehicle 200 has collected, stored and/or accumulated while traversing the area with insufficient coverage of the mobile communication system 100. The method may further comprise transmitting 242 the accumulated perception sensor data to the backend entity 300 after the vehicle 200 leaves the area with insufficient coverage of the mobile communication system 100.

The perception sensor data may further be shared among vehicles, e.g. via a direct vehicular communication protocol. In some embodiments, the method may comprise receiving 260 further perception sensor data from a further vehicle. For example, the further perception sensor data may be processed or pre-processed perception sensor data. The vehicle 200 may be operated based on the further perception sensor data. For example, the method may further comprise combining (i.e. fusing) the perception sensor data and the further perception sensor data. The vehicle 200 may be operated based on the combined perception sensor data. For example, sensor fusion may be applied on the perception sensor data and the further perception sensor data. For example, in operating the vehicle 200, the further perception sensor data may be used to detect objects hidden from the one or more perception sensors of the vehicle 200. The method may further comprise transmitting the perception sensor data of the vehicle 200 to one or more other vehicles for use in operating the other vehicles. In some embodiments, the method further comprises accumulating 262 the further perception sensor data, and forwarding 264 the accumulated further perception sensor data to the backend entity 300 after the vehicle 200 leaves the area with insufficient coverage of the mobile communication system 100.

In some embodiments, the method further comprises receiving further environmental modeling data from the further vehicle. For example, the further environmental modeling data may be aggregated environmental modeling data or momentary environmental modeling data. For example, the further environmental modeling data may be vehicle-generated environmental modeling data or backend-generated environmental modeling data. The vehicle may be operated 230 based on the further environmental modeling received from the further vehicle. In some embodiments, the method further comprises forwarding environmental modeling data (e.g. the aggregated environmental modeling data or the (momentary) environmental modeling data) to one or more other vehicles for use in operating the other vehicles. In some embodiments, the method may comprise compiling environmental modeling data for the one or more other vehicles based on the perception sensor data and/or based on the further perception sensor data and transmitting the compiled environmental modeling data to the one or more other vehicles. For example, the environmental modeling data received or transmitted between vehicles may comprise at least one of information related to one or more obstacles, information related to road conditions, information related to weather conditions (e.g. whether it rains or snows) and information related to a network coverage of the mobile communication system).

The vehicle 200 and the further vehicle may communicate using one of vehicle-to-vehicle communication (V2V) / car-to-car communication (C2C). The vehicle 200 and the further vehicle may communicate based on a vehicular communication protocol, e.g. based on a direct vehicular communication protocol. The vehicle 200 and the further vehicle may communicate directly, e.g. using direct V2V / C2C communication. For example, the (direct) vehicular communication protocol may be based on Institute of Electrical and Electronics Engineers standard 802.11p or based on 3GPP direct communication implementation for vehicles as introduced with Rel-14 and evolved with Rel-15, Rel-16 and following releases. The at least one interface 22 (and/or 42 as introduced in connection with Fig. 3b) may be configured to communicate via the (direct) vehicular communication network. The at least one interface 22 may be suitable for communicating with the backend entity 300 via the mobile communication system 100, for communicating with the further vehicle (e.g. using a vehicular communication protocol), and for obtaining perception sensor data from one of more perception sensors of the vehicle 200.

More details and aspects of the apparatus 20 and/or the method are mentioned in connection with the proposed concept or one or more examples described above or below (e.g. Fig. 1a to 1c, 3a to 4). The apparatus 20 and/or the method may comprise one or more additional optional features corresponding to one or more aspects of the proposed concept or one or more examples described above or below.

Fig. 3a shows a flow chart of an embodiment of a method for a vehicle 400. The method and/or the vehicle 400 may be implemented similar to the method and/or the vehicle 200 shown in connection with Figs. 2a and/or 2b. The method comprises receiving 410 (momentary) environmental modeling data from a backend entity 300 via a mobile communication system 100. The method further comprises obtaining 420 perception sensor data from one or more perception sensors of the vehicle 400. The method further comprises receiving 430 further perception sensor data from a further vehicle. The method further comprises operating 440 the vehicle 400. The operating 440 of the vehicle 400 comprises operating the vehicle 400 based on the (momentary) environmental modeling data and based on the perception sensor data while the vehicle 400 traverses an area with sufficient coverage of the mobile communication system 100. The operating 440 of the vehicle 400 comprises operating the vehicle 400 based on the further perception sensor data and based on the perception sensor data while the vehicle 400 traverses an area with insufficient coverage of the mobile communication system 100. The method may be performed by the vehicle 400.

Fig. 3b shows a block diagram of an embodiment of a corresponding apparatus 40 for a vehicle 400. The apparatus 40 may be implemented similar to the apparatus 20 shown in connection with Fig. 2c. The apparatus 40 comprises at least one interface 42 for communicating with the backend entity 300 via the mobile communication system 100, for communicating with the further vehicle, and for obtaining perception sensor data from the one of more perception sensors of the vehicle 400. The apparatus 40 comprises a control module 44 configured to receive the (momentary) environmental modeling data from the backend entity 300 via the mobile communication system 100 using the at least one interface 42. The control module 44 is configured to obtain perception sensor data from one or more perception sensors of the vehicle 400 via the at least one interface 42. The control module 44 is configured to receive the further perception sensor data from the further vehicle via the at least one interface. The control module 44 is configured to operate the vehicle 400. The vehicle 400 is operated based on the (momentary) environmental modeling data and based on the perception sensor data while the vehicle 400 traverses an area with sufficient coverage of the mobile communication system 100. The vehicle 400 is operated based on the further perception sensor data and based on the perception sensor data while the vehicle 400 traverses an area with insufficient coverage of the mobile communication system 100. Fig. 3b further shows the vehicle 400 comprising the apparatus 40.

The following description relates to both the method of Fig. 3a and the apparatus 40 of Fig. 3b.

For example, the method may further comprise receiving aggregated environmental modeling data for an area with insufficient coverage of the mobile communication system 100 along an estimated route of the vehicle 400. The vehicle 400 may be operated further based on the received aggregated environmental modeling data for the area with insufficient coverage of the mobile communication system while the vehicle 400 traverses the area with insufficient coverage of the mobile communication system.

In at least some embodiments, the method further comprises transmitting 450 the perception sensor data to one or more other vehicles for use in operating the other vehicles. The further perception sensor data may be pre-processed perception sensor data of the further vehicle, for example.

More details and aspects of the apparatus 40 and/or the method are mentioned in connection with the proposed concept or one or more examples described above or below (e.g. Fig. 1a to 2c, 4). The apparatus 40 and/or the method may comprise one or more additional optional features corresponding to one or more aspects of the proposed concept or one or more examples described above or below.

Embodiments relate to perception / map enhancement techniques for no-network coverage areas (i.e. areas with insufficient coverage of the mobile communication system).

In the future, the necessity of having highly precise maps and extended models of an environment of a vehicle may become ever more important. A comfort and a reliability of the future automated or highly automated driving may depend on an availability of such modeling data and maps (in the following denoted "data" or "environmental modelling data"). In at least some approaches, the data may be updated from various sources. Some of the sources may be comprised by the vehicle itself. The vehicle may provide (perception) sensor data recorded using the vehicle's sensors to other vehicles or to processing entities in a network (in the following denoted "backend system" or "backend entities"). The vehicles may also be data wells, which may use the data provided by other vehicles or by the backend entities to influence their driving. The transmission of said data may be performed using direct communication between the vehicles (e.g. using vehicle-to-vehicle communication) or using a mobile communication system between the vehicle and the backend entity. If the transmission is performed via a mobile communication system, the data might (only) be transmitted in areas with sufficient coverage (of the mobile communication system).

In the future, as today, there may be areas with insufficient coverage of the mobile communication system. To enable a use of the data also in areas with insufficient coverage of the mobile communication system, alternative methods for distributing the data may be required.

In the following, embodiments of the invention are introduced. The embodiments may be combined to provide an improved transmission of the data. Each of the vehicles may be equipped with a transmitter module and a receiver module, e.g. a transceiver module. If, in the following, a vehicle "transmits" some data, it is a short notation for "the transmitter module/receiver module of the vehicle" transmitting the data.

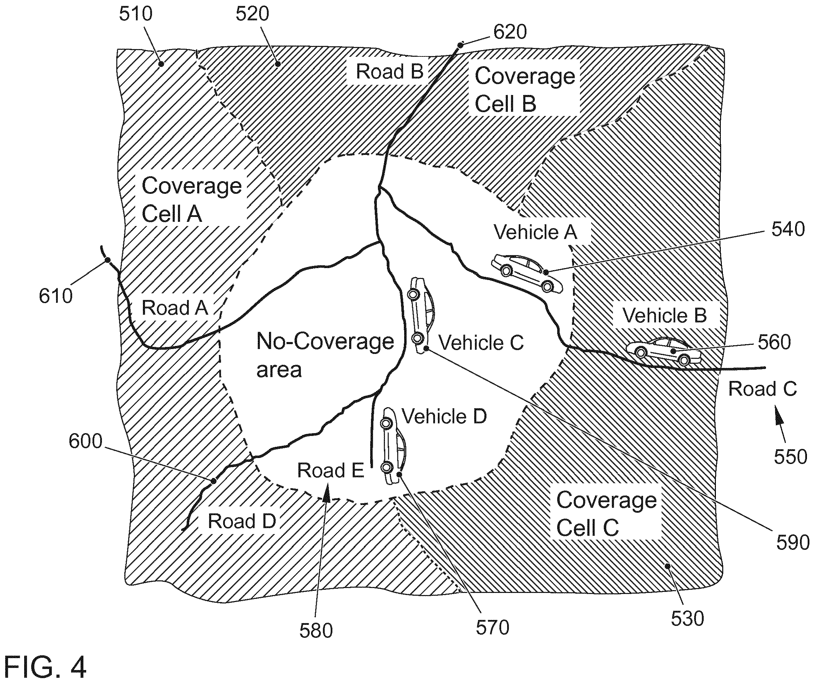

Fig. 4 shows a schematic map of a scenario comprising an area with insufficient coverage of a mobile communication system. All examples shown in the following may be combined, e.g. a vehicle may perform the actions of multiple example.

In a first example, a processing system (e.g. the backend entity or backend system) may process sensor data of a sensory system of a vehicle (e.g. RADAR (Radio Detection and Ranging), LIDAR (Light Detection and Ranging), ultrasound, ABS (Anti-lock Braking System), ESC (Electronic Stability Control) to create highly detailed mays and/or extended models of an environment of the vehicle (e.g. the environmental modeling data). Such maps or models may be transmitted via a mobile communication system (represented by Cell A 510, Cell B 520 and Cell C 530 of Fig. 4), e.g. the mobile communication system 100.

In a second example, Vehicle A 540 (e.g. vehicle 200; 300 of at least one of Figs. 1a-3b) drives on road C 550 through an area with insufficient coverage of the mobile communication system. A sensory system of the vehicle (e.g. RADAR, LIDAR, ultrasound, ABS, ESC) may record the property of the environment (e.g. obstacles, lane conditions, rain, temperature), accumulate and store said sensor data (e.g. as accumulated perception sensor data). For example, the sensor data may be processed or pre-processed before storing. As soon as vehicle A 540 reaches an area with sufficient coverage of the mobile communication system (here: cell C 530), the previously accumulated sensor data may be to transmitted to one or more backend systems, e.g. the backend entity.

In a third example, Vehicle B 560 drives on road C 550. Vehicle B in connected to the mobile communication system via Cell C 530. Vehicle B uses momentary additional information of highly detailed maps and extended models of the vehicle's environment (e.g. the (momentary) environmental modeling data) for automated driving. This data may be provided momentarily transmitted via the mobile communication system based on a route (and position) of the vehicle B. Vehicle B transmits its current position and its planned route to the mobile communication system and/or to the backend system. The mobile communication system and/or the backend system determines that an area with insufficient coverage of the mobile communication system is located along the planned route of vehicle B. The backend system may use this information to transmit data (e.g. the aggregated environmental modeling data) to vehicle B. Based on this data, and the information, that an area with insufficient coverage of the mobile communication system may be traversed, vehicle B may conclude its drive with as little loss of comfort and reliability as possible without coverage of the mobile communication system.

In example 4, vehicle B 560 of example 3 may be configured to act like vehicle A 540 from example 2.

In example 5, vehicle D 570 drives on Road E 580 in an area with insufficient coverage of the mobile communication system. A sensory system of the vehicle D (e.g. RADAR, LIDAR, ultrasound, ABS, ESC) may record the property of the environment (e.g. obstacles, lane conditions, rain, temperature), accumulate and store said sensor data. For example, the sensor data may be processed or pre-processed before storing. Vehicle C 590 may also drive within an area with insufficient coverage of the mobile communication system. A sensory system of the vehicle C 590 (e.g. RADAR, LIDAR, ultrasound, ABS, ESC) may record the property of the environment (e.g. obstacles, lane conditions, rain, temperature), accumulate and store said sensor data. For example, the sensor data may be processed or pre-processed before storing. Vehicles C 590 and D 570 may approach each other. Both vehicles may communicate using (direct) vehicle-to-vehicle communication. Both vehicles may notify the respective other vehicles, that they have stored data related to the road they have been driving. Each vehicle may request and/or retrieve the entire or a subset of the stored data. This data might also be transmitted using direct (vehicle-to-vehicle) communication. A prioritization of the data to be transmitted may be determined. This may ensure that the most relevant or the most important data is transmitted first before a range of the direct communication is surpassed.

In an extension to example 5, in example 6, vehicle C 590 drives on road D 600 into an area with sufficient coverage of the mobile communication system (here: Cell A 510). As soon as sufficient coverage is available, vehicle C 590 may transmit the data recorded using vehicle C's sensory system (e.g. the accumulated perception sensor data) and/or the data recorded using vehicle D's sensory system (e.g. the accumulated further perception data) to one or more backend systems, e.g. the backend entity. Fig. 4 further shows Road A 610 and Road B 620, which are not used in the above examples.

More details and aspects of the method are mentioned in connection with the proposed concept or one or more examples described above (e.g. Fig. 1a to 3b). The method may comprise one or more additional optional features corresponding to one or more aspects of the proposed concept or one or more examples described above or below.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

List of reference signs
- 20: Apparatus
- 22: Interface
- 24: Control Module
- 30: Apparatus
- 32: Interface
- 34: Control Module
- 40: Apparatus
- 42: Interface
- 44: Control Module
- 100: Mobile Communication System
- 110: Determining an estimated driving route of a vehicle
- 120: Determining information related to an area with insufficient coverage of a mobile communication system
- 130: Determining a scope of aggregated environmental modeling data
- 140: Transmitting aggregated environmental modeling data
- 150: Transmitting environmental modeling data
- 160: Receiving accumulated perception sensor data
- 170: Receiving accumulated further perception sensor data
- 200: Vehicle
- 210: Receiving aggregated environmental modeling data
- 220: Obtaining perception sensor data
- 230: Operating a vehicle
- 240: Accumulating the perception sensor data
- 242: Transmitting the accumulated perception sensor data
- 250: Receiving environmental modeling data
- 260: Receiving further perception sensor data
- 262: Accumulating the further perception sensor data
- 264: Transmitting the accumulated further perception sensor data
- 300: Backend Entity
- 400: Vehicle
- 410: Receiving environmental modeling data
- 420: Obtaining perception sensor data
- 430: Receiving further perception sensor data
- 440: Operating a vehicle
- 450: Transmitting the perception sensor data
- 510: Cell A
- 520: Cell B
- 530: Cell C
- 540: Vehicle A
- 550: Road C
- 560: Vehicle B
- 570: Vehicle D
- 580: Road E
- 590: Vehicle C
- 600: Road D
- 610: Road A
- 620: Road B

## Claims

1. Method for a backend entity (300), wherein the backend entity (300) communicates with a vehicle (200) via a mobile communication system (100), the method comprising:
Determining (110) an estimated driving route of the vehicle (200);
Determining (120) information related to an area with insufficient coverage of the mobile communication system (100) along the estimated route of the vehicle (200); and
Transmitting (140) aggregated environmental modeling data for the area with insufficient coverage of the mobile communication system (100) from the backend entity (300) to the vehicle (200) based on the information related to the area with insufficient coverage of the mobile communication system (100).

2. The method according to claim 1, wherein the method further comprises Determining (130) a scope of the aggregated environmental modeling data based on the area with insufficient coverage of the mobile communication system (100), and wherein the aggregated environmental modeling data is based on the determined (130) scope of the aggregated environmental modeling data.

3. The method according to one of the claims 1 or 2, wherein the aggregated environmental modeling data for the area with insufficient coverage of the mobile communication system (100) comprises environmental modeling data to be used for operating the vehicle (200) along the estimated driving route of the vehicle (200) within the area with insufficient coverage of the mobile communication system (100).

4. The method according to one of the previous claims, wherein the method further comprises transmitting (150) environmental modeling data to the vehicle (200) before the vehicle (200) enters the area with insufficient coverage of the mobile communication system (100) and/or after the vehicle (200) leaves the area with insufficient coverage of the mobile communication system (100).

5. The method according to claim 4, wherein the environmental modeling data corresponds to environmental modeling data to be used for operating the vehicle (200) outside the area with insufficient coverage of the mobile communication system (100).

6. The method according to one of the previous claims, wherein the method further comprises receiving (160) accumulated perception sensor data of the area with insufficient coverage of the mobile communication system (100) from the vehicle (200) after the vehicle (200) leaves the area with insufficient coverage of the mobile communication system (100),
and/or wherein the method further comprises receiving (170) accumulated further perception sensor data of the area with insufficient coverage of the mobile communication system (100) from the vehicle (200) after the vehicle (200) leaves the area with insufficient coverage of the mobile communication system (100) wherein the accumulated further perception sensor data originates from a further vehicle.

7. A method for a vehicle (200), wherein the vehicle (200) communicates with a backend entity (300) via a mobile communication system (100), the method comprising:
Receiving (210) aggregated environmental modeling data for an area with insufficient coverage of the mobile communication system (100) along an estimated route of the vehicle (200) and/or Receiving (260) further perception sensor data from a further vehicle;
Obtaining (220) perception sensor data from one or more perception sensors of the vehicle (200); and
Operating (230) the vehicle (200) based on the perception sensor data and based on at least one element of the group of the received aggregated environmental modeling data for the area with insufficient coverage of the mobile communication system (100) and the further perception sensor data.

8. The method according to claim 7, wherein the method further comprises accumulating (240) the perception sensor data while the vehicle (200) traverses the area with insufficient coverage of the mobile communication system (100), and transmitting (242) the accumulated perception sensor data to the backend entity (300) after the vehicle (200) leaves the area with insufficient coverage of the mobile communication system (100).

9. The method according to one of the claims 7 or 8, wherein the method further comprises receiving (250) environmental modeling data from the backend entity (300) before the vehicle (200) enters the area with insufficient coverage of the mobile communication system (100) and/or after the vehicle (200) leaves the area with insufficient coverage of the mobile communication system (100), wherein the vehicle (200) is operated (230) based on the received environmental modeling data.

10. The method according to one of the claims 7 to 9, wherein the further perception sensor data is related to environmental modeling data,
and/or wherein the method further comprises accumulating (262) the further perception sensor data, and forwarding (264) accumulated further perception sensor data to the backend entity (300) after the vehicle (200) leaves the area with insufficient coverage of the mobile communication system (100),
and/or wherein the further perception sensor data is pre-processed perception sensor data of the further vehicle.

11. The method according to one of the claims 7 to 10, wherein the method further comprises receiving further environmental modeling data from the further vehicle, wherein the vehicle is operated (230) based on the further environmental modeling received from the further vehicle,
and/or wherein the method further comprises forwarding environmental modeling data to one or more other vehicles for use in operating the other vehicles.

12. The method according to one of the claims 7 to 11, wherein the method further comprises transmitting the perception sensor data to one or more other vehicles for use in operating the other vehicles.

13. A computer program having a program code for performing at least one of the methods according to one of the previous claims, when the computer program is executed on a computer, a processor, or a programmable hardware component.

14. An Apparatus (30) for a backend entity (300), the apparatus (30) comprising:
at least one interface (32) for communicating with a vehicle (200) via a mobile communication system (100); and
a control module (34) configured to:
Determine an estimated driving route of the vehicle (200),
Determine information related to an area with insufficient coverage of the mobile communication system (100) along the estimated route of the vehicle (200),
Transmit aggregated environmental modeling data for the area with insufficient coverage of the mobile communication system (100) to the vehicle (200) using the at least one interface (32) based on the information related to the area with insufficient coverage of the mobile communication system (100).

15. An apparatus (20) for a vehicle (200), the apparatus (20) comprising:
at least one interface (22) for communicating with a backend entity (300) via a mobile communication system (100); and
a control module (24) configured to:
Receive aggregated environmental modeling data for an area with insufficient coverage of the mobile communication system (100) along an estimated route of the vehicle (200) via the at least one interface (22) and/or receive further perception sensor data from a further vehicle via the at least one interface (22),
Obtain perception sensor data from one or more perception sensors of the vehicle (200), and
Operate the vehicle (200) based on the perception sensor data and based on at least one element of the group of the received aggregated environmental modeling data for the area with insufficient coverage of the mobile communication system (100) and the further perception sensor data.
